# EUROPÄISCHE PATENTSCHRIFT

(11) **EP 3 357 323 B1**
(45) Veröffentlichungstag und Bekanntmachung des Hinweises auf die Patenterteilung: **01.04.2020**
(21) Anmeldenummer: 17154398.6
(22) Anmeldetag: 02.02.2017
(51) Int. Cl.: A01D 78/12

(54) **HÖHENVERSTELLBARE KURVENBAHN**
HEIGHT ADJUSTABLE CURVED PATH
RAINURE DE CAME RÉGLABLE EN HAUTEUR

(43) Veröffentlichungstag der Anmeldung: 08.08.2018
(73) Patentinhaber: Kverneland Group Kerteminde AS, 5300 Kerteminde (DK)
(72) Erfinder: Gohl, Stefan, 78244 Gottmadingen (DE); Köbler, Stefan, 74864 Fahrenbach-Trienz (DE)
(74) Vertreter: Grünecker Patent- und Rechtsanwälte PartG mbB

(56) Entgegenhaltungen:
- EP-A1- 2 090 152
- EP-A1- 2 238 823
- DE-A1- 1 805 472
- DE-A1- 1 960 354
- DE-B- 1 582 432
- GB-A- 2 048 042

## Beschreibung

Die Erfindung betrifft eine Heuwerbungsmaschine, insbesondere einen Schwader gemäß dem Oberbegriff des Anspruchs 1 sowie ein Verfahren zum Einstellen des Schwenkwinkels von Rechenzinken gemäß Anspruch 8.

Heuwerbungsmaschinen mit Rechenkreiseln sind beispielsweise bereits aus der DE 42 01 881 A1, DE 10 2009 016 519 A1 sowie DE 20 2006 015 108 U1 bekannt. Bei den bekannten Heuwerbungsmaschinen kann der Schwenkwinkel der Rechenzinken um die Längsachse eines jeweiligen Zinkenarms eines Rechenkreisels durch eine Kurvensteuerung eingestellt werden. Somit kann der Schwenkwinkel der Rechenzinken in Abhängigkeit der Umlaufposition des Zinkenarms eingestellt werden.

Es ist bereits bekannt, dass man das Rotorgehäuse höhenverstellbar ausgebildet, beispielsweise aus den beiden Druckschriften GB-A-2 048 042 sowie DE-A1-18 05 472. Somit kann der Abstand der Zinken zum Boden verstellt werden. Die Neigung bzw. der Schwenkwinkel der Rechenzinken ist fertigungsbedingt durch die Ausbildung der Steuerkurve bzw. Kurvenbahn festgelegt. Im Hinblick auf die verschiedenen Anwendungen und unterschiedlichen Betriebsbedingungen einer Heuwerbungsmaschine, ist es wünschenswert, den Schwenkwinkel entsprechend anzupassen. Insbesondere ist es zum Beispiel wünschenswert, den Schwenkwinkel in Abhängigkeit des Futteraufkommens einzustellen, ohne dass große bauliche Maßnahmen notwendig sind. Dies ist bislang nicht möglich.

Hiervon ausgehend liegt der vorliegenden Erfindung die Aufgabe zu Grunde, eine Heuwerbungsmaschine und ein entsprechendes Verfahren zum Einstellen des Schwenkwinkels von Rechenzinken bereitzustellen, die ein einfaches Anpassen des Schwenkwinkels der Rechenzinken an unterschiedliche Bedingungen ermöglichen.

Erfindungsgemäß wird diese Aufgabe durch die Merkmale der Ansprüche 1 und 8 gelöst.

Die Heuwerbungsmaschine gemäß der vorliegenden Erfindung umfasst mindestens einen Rechenkreisel. Der Rechenkreisel umfasst ein Rotorgehäuse, in dem mehrere umlaufende Zinkenarme mit Rechenzinken gelagert sind. Die Zinkenarme laufen dabei um die Rotorachse A um. In dem Rotorgehäuse ist eine Kurvenbahn angeordnet, über die der Schwenkwinkel α der Rechenzinken um die Längsachse des jeweiligen Zinkenarms in Abhängigkeit der Umlaufposition des Zinkenarms steuerbar ist. Unter Schwenkwinkel versteht man hier zum Beispiel den Winkel zwischen dem Rechenzinken und einer Ebene, die von der Längsachse L des Zinkenarms und der Rotorachse A bzw. einer dazu parallelen vertikalen Achse aufgespannt wird. Eine entsprechende Kurvenbahn ermöglicht, dass die Zinkenarme, wenn sie um die Rotorachse umlaufen, derart um ihre Achse verdreht werden können, dass die Zinken entweder in ihre Rechenposition, d.h. Arbeitsposition, gebracht werden oder aus dieser ausgehoben werden können.

Gemäß der vorliegenden Erfindung ist nun zusätzlich zu der Steuerung des Schwenkwinkels durch die geschlossene Kurvenbahn noch eine weitere Einstellmöglichkeit für den Schwenkwinkel, das heißt die Zinkenstellung in der Arbeitsphase gegeben. Gemäß der vorliegenden Erfindung ist die Kurvenbahn innerhalb des Rotorgehäuses höhenverstellbar. Das heißt, dass die Kurvenbahn relativ zum Rotorgehäuse höhenverstellt werden kann. Während im Stand der Technik nur das Rotorgehäuse zusammen mit der Kurvenbahn höhenverstellbar war, kann nun alternativ oder zusätzlich die Höhe der Kurvenbahn im Rotorgehäuse relativ zu den rotierenden Elementen verstellt werden, so dass durch diese Bewegung die Zinkenarme ebenfalls im ihre Längsachse L gedreht werden und sich der Schwenkwinkel, bzw. die Zinkenstellung in der Arbeitsphase entsprechend ändert. Somit kann durch diese Höhenverstellung der Kurvenbahn ein mehr oder weniger weiches oder hartes Eingreifen der Rechenzinken realisiert werden. Somit kann beispielsweise der Schwenkwinkel, bzw. die Zinkenstellung α an das Futteraufkommen angepasst werden und bei wenig oder leichtem Futter schonend eingestellt werden, indem beispielsweise der Schwenkwinkel, bzw. die Zinkenstellung so eingestellt wird, dass der gerade Endbereich der Zinken in Rotationsrichtung nach vorne geneigt ist. Eine normale Einstellung der Zinken, beispielsweise bei normal schwerem Futter in normalen Mengen kann erreicht werden, wenn der untere gerade Bereich der Zinken entgegengesetzt zur Rotationsrichtung nach hinten geneigt ist. Eine aggressive Einstellung auf Griff, beispielsweise bei einer großen Menge an Futter und schwerem Futter kann realisiert werden, indem der untere gerade Bereich der Zinken noch weiter entgegen der Drehrichtung des Rotors nach hinten geneigt ist.

Somit kann der Landwirt zwischen einer schonenden normalen und aggressiven Einstellung der Zinken wählen, indem er auf einfache Art und Weise die Kurvenbahn in ihrer Höhe anpasst. Somit kann durch die Höhenverstellung der Kurvenbahn der Schwenkwinkel der Rechenzinken entsprechend verändert werden.

Gemäß einer bevorzugten Ausführungsform sind die Zinkenarme drehfest mit Hebeln, insbesondere Rollenhebeln verbunden, wobei die dem jeweiligen Zinkenarm abgewandten Enden der Hebel in der Kurvenbahn geführt werden, wobei insbesondere die Rollen in der Kurvenbahn laufen. Somit kann der Schwenkwinkel in Abhängigkeit der Umlaufposition werkseitig durch eine bestimmte Konstruktion bzw. einen bestimmten Höhenverlauf der Kurvenbahn festgelegt werden und jetzt zusätzlich vom Landwirt durch die höhenverstellbare Kurvenbahn nachgestellt und an individuelle Bedürfnisse angepasst werden.

Gemäß einer bevorzugten Ausführungsform kann die Höhenverstellung elektrisch erfolgen. Dazu ist beispielsweise ein Motor vorgesehen, insbesondere ein Spindelmotor mit einem Pulsgebersensor. Über den Motor und eine entsprechende Kurvenhalterung kann dann auf einfache Art und Weise die Höhe der nicht rotierenden Kurvenbahn im Rotorgehäuse verstellt werden. Durch die elektrische Verstellmöglichkeit ist es möglich, dass der Landwirt vom Schlepper aus den Schwenkwinkel automatisch anpassen kann, ohne die Führung etc. mechanisch von Hand zu verändern.

Der Motor ist insbesondere über eine Halterung befestigt. Der Motor selbst bleibt gemäß einem Ausführungsbeispiel während der Höhenverstellung der Kurvenbahn unbewegt, d.h. der Motor selbst wird nicht höhenverstellt. Dazu ist der Motor beispielsweise mit seiner Halterung an einem statischen Teil der Getriebeeinrichtung z.B. am Getriebegehäuse oberhalb des Rotorgehäuses befestigt. Das Rotorgehäuse ist auf der Rotorachse drehbar gelagert und wird von dem Getriebe angetrieben. Es ist auch möglich, dass der Motor an der Kurvenbahn befestigt ist und bei einer Höhenverstellung der Kurvenbahn eine Relativbewegung zu einem Getriebegehäuse ausführt.

Die Kurvenbahn ist z.B. um einen Verstellweg von ± 6 - 12 mm von einer mittleren Position aus nach oben oder unten verfahrbar, derart, dass es zu einer relativen Veränderung des Schwenkwinkels der Rechenzinken in einem Bereich von bis zu ± 5 - 10 Grad kommt. Das bedeutet, dass es zum Beispiel vorzugsweise zu einer Verstellung des Schwenkwinkels pro Stellweg von 0,4-1,6 °/mm, insbesondere 0,6 - 1 °/mm kommt. Somit ist eine ideale Feineinstellung der Winkelposition der Rechenzinken möglich.

Bei einem Verfahren beim Einstellen des Schwenkwinkels von Rechenzinken um die Längsachse eines jeweiligen Zinkenarms eines Rechenkreisels einer Heuwerbungsmaschine wird eine Kurvenbahn, über die die Schwenkwinkel der Rechenzinken um die Längsachse des jeweiligen Zinkenarms in Abhängigkeit der Umlaufposition des Zinkenarms gesteuert werden, in einem Rotorgehäuse des Rechenkreisels höhenverstellt.

Eine entsprechende Verstellung kann entweder vor dem Betrieb der Heuwerbungsmaschine angepasst werden und/oder auch während des Betriebs. Dies ist insbesondere dann von Vorteil, wenn der Landwirt während des Betriebs bemerkt, dass die Einstellung des Schwenkwinkels nicht passt, beispielsweise zu schonend ist oder zu aggressiv wobei entsprechende Änderungen dann unverzüglich möglich sind.

Gemäß einer bevorzugten Ausführungsform wird die Höhe der Kurvenbahn in Abhängigkeit der Futtermenge bzw. Erntegutmenge und /oder des Futtergewichts bzw. Erntegutgewichts eingestellt. Unter Futtermenge (Erntegutmenge) versteht man beispielsweise das Volumen an Futter (Erntegut) pro Flächeneinheit und unter Futtergewicht versteht man beispielsweise das Gewicht an Futter pro Flächeneinheit. Alternativ oder zusätzlich kann die Höhe der Kurvenbahn auch in Abhängigkeit weiterer Parameter, zum Beispiel vom Drehmoment des Schwaderantriebs, der Arbeitsgeschwindigkeit, der Kreiseldrehzahl, des Futterverlusts, der Futterverschmutzung, der Schwadhöhe und/oder der Feuchtigkeit des Ernteguts bzw. Futters eingestellt werden. Der oder die Parameter können über eine Detektionseinrichtung erfasst werden, wobei die entsprechenden Messwerte dann an eine Steuereinrichtung weitergeleitet werden. Somit ist eine automatische Einstellung der Kurvenbahnhöhe möglich.

Gemäß einer bevorzugten Ausführungsform ist es möglich, dass ein unterer Bereich der Rechenzinken in seiner Arbeitsstellung auf einen Schwenkwinkel α zwischen dem unteren Bereich der Rechenzinken und einer Ebene, die durch die Längsachse L des Zinkenarms und die Rotorachse A oder einer dazu parallelen vertikalen Achse aufgespannt wird, von -6 -0°, insbesondere 1°, nach hinten entgegen der Drehrichtung D des Rotorgehäuses verschwenkt wird,) von 6° --0°, insbesondere 1°, nach hinten entgegen der Drehrichtung D des Rotorgehäuses verschwenkt wird oder bis zu einem Winkel zwischen 0° und -2° nach vorne in Drehrichtung D des Rotorgehäuses verschwenkt wird , wenn eine schonende Einstellung gewünscht ist. Nach hinten verschwenkt bedeutet hier, dass in Drehrichtung betrachtet die unteren freien Enden der Rechenzinken weiter hinten liegen als die darüber liegenden Teile des unteren Bereichs der Rechenzinken, d.h. dass der gesamte gerade untere Bereich der Rechenzinken in Drehrichtung betrachtet nach vorne gekippt ist.

Alternativ ist es möglich, dass ein unterer Bereich der Rechenzinken in seiner Arbeitsstellung auf einen Schwenkwinkel α zwischen dem unteren Bereich und einer Ebene, die durch die Längsachse L des Zinkenarms und die Rotorachse A oder einer dazu parallelen vertikalen Achse oder einer dazu parallelen vertikalen Achse aufgespannt wird, von -2 bis -6°, insbesondere - 4°, nach vorne in Drehrichtung D des Rotorgehäuses verschwenkt wird, wenn eine normale Einstellung gewünscht wird .

Es ist auch möglich, dass ein unterer Bereich der Rechenzinken in seiner Arbeitsstellung auf einen Schwenkwinkel α zwischen dem unteren Bereich und einer Ebene, die durch die Längsachse L des Zinkenarms und die Rotorachse A aufgespannt wird, von -6 bis -14°, insbesondere - 9°, nach vorne in Drehrichtung D des Rotorgehäuses verschwenkt wird, wenn eine aggressive Einstellung gewünscht wird. Nach vorne verschwenkt bedeutet hier, dass in Drehrichtung betrachtet die unteren freien Enden der Rechenzinken weiter vorne liegen als die darüber liegenden Teile des unteren Bereichs der Rechenzinken, das heißt dass der gesamte gerade untere Bereich nach hinten gekippt ist.

Unter unterem Bereich der Rechenzinken versteht man bei dieser Definition zum Beispiel bei Rechenzinken, die mindestens einen Knick aufweisen den, dem Boden zugewandten unteren geraden Teil. Selbstverständlich umfasst diese Formulierung auch den unteren Bereich von geraden Rechenzinken.

Unter Arbeitsstellung versteht man eine Rechenposition, d.h. eine Stellung in der die Rechenzinken nach unten Richtung Boden verschwenkt sind. Bei einem Umlauf der Zinkenarme um die Achse A befinden sich die Rechenzinken etwa 36 -41.% ihrer Umlaufbahn in der Arbeitsstellung.

Gemäß einer bevorzugten Ausführungsform erfolgt die Einstellung der Höhe der Kurvenbahn automatisch. Dazu umfasst die Heuwerbungsmaschine vorzugsweise eine Steuer-/Regeleinrichtung, die den Motor ansteuert um die Kurvenbahn automatisch relativ zum Rotorgehäuse zu verstellen. Messwerte werden an die Steuer-/Regeleinrichtung geleitet. Dann wird die Höhe der Kurvenbahn in Abhängigkeit von Messwerten mindestens einer Detektionseinrichtung eingestellt bzw. geregelt. Dies ermöglicht, dass stets eine korrekte Einstellung der Höhe der Kurvenbahn realisiert werden kann, ohne dass der Landwirt eine entsprechende Höhe ermitteln und einstellen muss. Auch eine Korrektur bzw. Regelung der Höhe bei sich ändernden Bedingungen, wie beispielsweise Änderung des Volumens und oder der Beschaffenheit des Ernteguts bzw. Futters bzw. Schwadhöhe etc. ist während des Verfahrens möglich.

Gemäß einer bevorzugten Ausführungsform kann dabei die Heuwerbungsmaschine als Detektionseinrichtung eine Kamera, beispielsweise eine Videokamera und/oder einen Lasersensor aufweisen, die am Schlepper, oder am Schwader montiert sind. Besonders vorteilhaft sind eine Kamera und/oder mindestens ein Sensor an der Schleppervorderseite montiert, die Video- und/oder Sensorsignale erzeugen, die der Futtermasse/und oder -menge entsprechen.

Die Heuwerbungsmaschine kann als Detektionseinrichtung auch mindestens je einen Sensor zur Ermittlung der Erntegutverluste, der Schwadgröße und der Futterverschmutzung umfassen.

Diese Sensoren werden vorzugsweise unmittelbar hinter dem Schwader installiert. Die Heuwerbungsmaschine kann als Detektionseinrichtung auch mindestens einen Feuchtigkeitssensor umfassen. Die Feuchtigkeit des Ernteguts hat wiederum Einfluss auf das Gewicht bzw. das Volumen des Ernteguts bzw. Futters, so dass es vorteilhaft ist die Höhe der Kurvenbahn in Abhängigkeit entsprechender Messwerte einzustellen.

Die Heuwerbungsmaschine kann als Detektionseinrichtung auch mindestens einen Höhensensor umfassen, der als Messwert die Schwadhöhe misst. Eine entsprechende Detektionseinrichtung kann beispielsweise eine Radar - Messeinrichtung sein. Die Höhe kann dabei relativ zu einem Bezugspunkt, wie beispielsweise Erdboden und/oder Rahmen des Schwaders etc. bestimmt werden.

Es ist ganz besonders vorteilhaft, wenn die Heuwerbungsmaschine einen Sensor für den Spindelmotor aufweist, zur Ermittlung der Lage der Kurvenbahn. Dann kann beispielsweise eine Steuer-/Regeleinrichtung stets den korrekten Schwenkwinkel ermitteln und einstellen.

Gemäß einem Ausführungsbeispiel kann die Kurvenbahn mit einem Hydraulikzylinder verstellt werden.

Gemäß einem bevorzugten Ausführungsbeispiel kann die Stellung der Kurvenbahn auch in Abhängigkeit eines GPS-Signals und einer digitalen Karte, in der Sonderbedingungen im Feld (wie beispielsweise Moor, Felsen, Ertragskarte an etc.) verzeichnet sind, eingestellt werden.

Die vorliegende Erfindung wird nachfolgend unter Bezugnahme folgender Figuren näher erläutert.
- Figur 1: zeigt schematisch eine Teilansicht einer Heuwerbungsmaschine 1 gemäß der vorliegenden Erfindung.
- Figur 2: zeigt grob schematisch einen Schnitt durch einen Teil eines Rechenkreisels 2 gemäß der vorliegenden Erfindung
- Figur 3: zeigt grob schematisch einen Aufriss eines Teils eines Rechenkreisels 2 im Längsschnitt gemäß der vorliegenden Erfindung
- Figur 4a: zeigt schematisch einen Teil der erfindungsgemäßen Kurvenführung in perspektivischer Darstellung
- Figur 4b: zeigt schematisch eine alternative Ausführung zur Höhenverstellung der Kurvenbahn 6
- Figur 5a: zeigt grob schematisch eine schonende Einstellung der Rechenzinken 5
- Figur 5b: zeigt grob schematisch eine normale Einstellung der Rechenzinken 5
- Figur 5c: zeigt grob schematisch eine aggressive Einstellung der Rechenzinken 5
- Figur 6a: zeigt grob schematisch in perspektivischer Darstellung einen Zinkenarm 4 in einer ersten Schwenkposition
- Figur 6b: zeigt den in Figur 6a gezeigten Zinkenarm 4 in einer zweiten Schwenkposition
- Figur 6c: zeigt vereinfacht und grob schematisch eine Anordnung von Rollenhebeln und Zinkenarmen 4 im Rotorgehäuse im Querschnitt

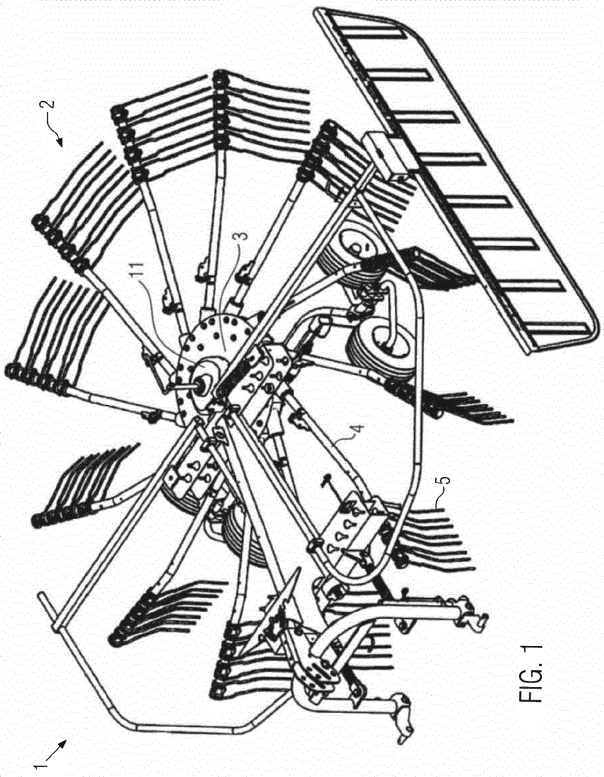

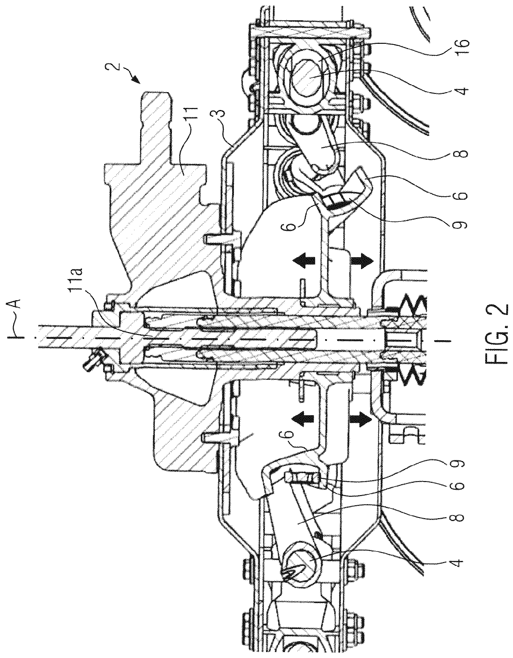

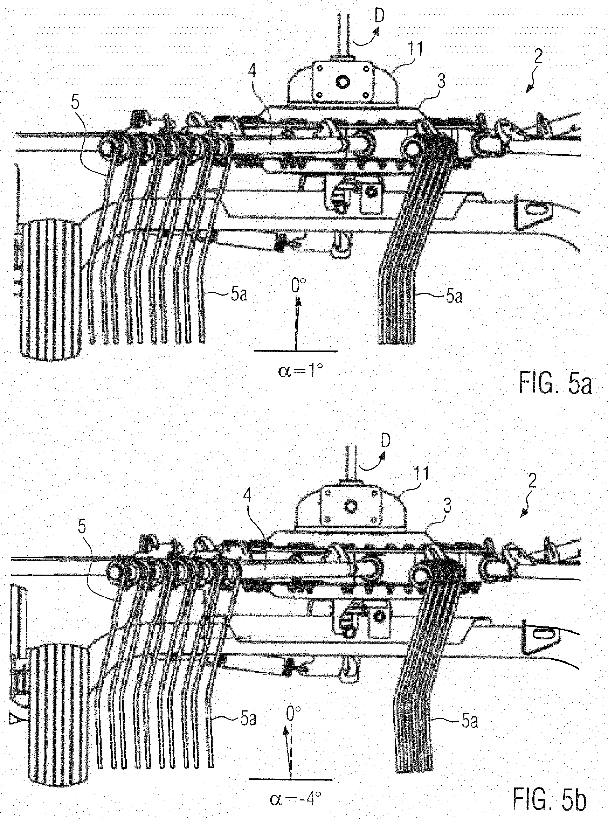

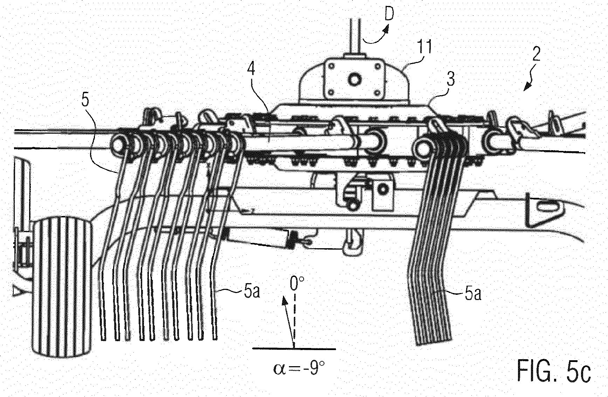

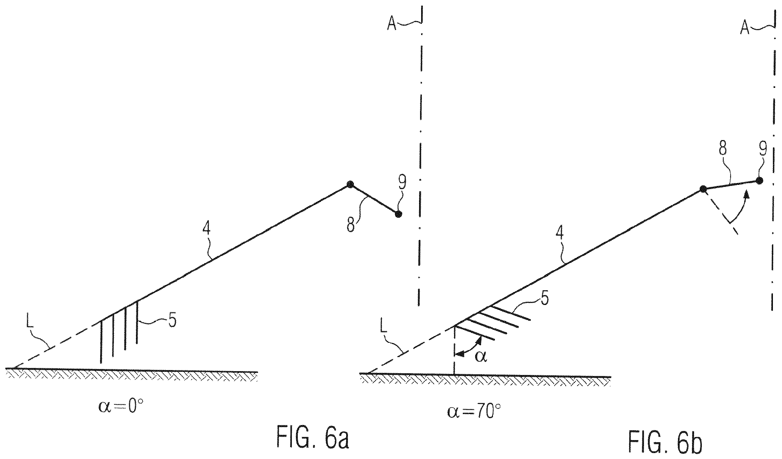

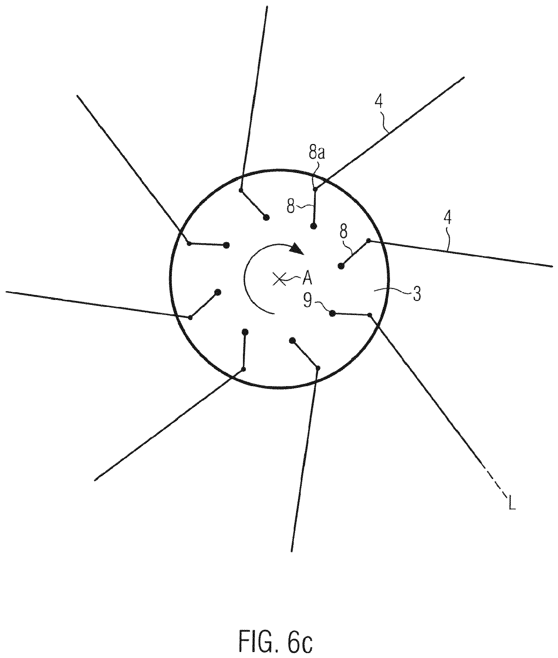

Figur 1 zeigt einen Teil einer Heuwerbungsmaschine 1 in Form eines Schwaders, mit einem Rechenkreisel 2, der an einem Tragrahmen befestigt ist. Figur 2 zeigt schematisch einen Schnitt durch einen Teil eines Rechenkreisels 2. Der Rechenkreisel 2 weist ein Rotorgehäuse 3 auf. Das Rotorgehäuse 3 ist drehbar um die Rotorachse A gelagert und wird in bekannter Weise von einem Getriebe 11a, z.B. einem Kegelradgetriebe 11, das in einem entsprechenden Gehäuse gelagert ist, umlaufend angetrieben. In den Öffnungen 16 des Rotorgehäuses 3 sind die Zinkenarme 4 gelagert und werden vom Rotorgehäuse 3 angetrieben. Wie beispielsweise aus Figuren 5 und 6 hervorgeht, sind an den Zinkenarmen 4 Rechenzinken 5 angeordnet. Der Schwenkwinkel α um die Längsachse L des Zinkenarms 4 kann während des Umlaufs der Zinkenarme 4 um die Achse A angepasst werden.

Dazu weisen die entsprechenden Zinkenarme 4 an ihrem zur Rotorachse A gewandten Ende einen Hebel 8, insbesondere Rollenhebel 8 auf, wobei die Zinkenarme 4 jeweils drehfest mit den Hebeln 8 verbunden sind. Das dem jeweiligen Zinkenarm 4 abgewandte Ende 9 des Hebels 8 wird in einer zum Beispiel am Getriebegehäuse 11 befestigten Kurvenbahn 6 geführt. Vorzugsweise ist dieser Endbereich 9 als Rolle 9 ausgelegt, die in der Kurvenbahn 6 rollt, wie insbesondere aus den Figuren 2 bis 4 hervorgeht. Die Auflagefläche der Kurvenbahn 6 für die Rollen ändert während eines Umlaufs ihre Höhe. Wie insbesondere aus den Figuren 6a und 6b hervorgeht, ändert sich durch die Höhenbewegung des Rollenhebels 8 auch der Schwenkwinkel α der Rechenzinken 5. Figur 6a zeigt beispielsweise einen Winkel α von 0°, d.h. einen Winkel, bei dem die Rechenzinken 5 senkrecht zu einer Bodenfläche, d.h. vertikal ausgerichtet sind, bzw. parallel zu einer Ebene ausgerichtet sind, die durch die Längsachse L des entsprechenden Zinkenarms 5 und der Rotorachse A oder einer dazu parallelen vertikalen Achse aufgespannt wird. Wird nun der Hebel 8, wie durch den Pfeil dargestellt wird, nach oben durch die Kurvenbahn 6 bewegt, wird der Zinkenarm 4 um seine Längsachse L verdreht, wobei auch die Zinken 5 entsprechend verschwenkt werden, z.B. auf 70 °, wie aus Figur 6b hervorgeht. So können also die Rechenzinken 5 während eines Umlaufs entweder in ihrer Rechenposition, d.h. Arbeitsposition gebracht werden oder aber wieder aus dieser aufgehoben werden.

Wie in der grob schematischen Darstellung in Figur 6c zu erkennen ist, sind mehrere Zinkenarme 4 gleichmäßig verteilt angeordnet, wobei hier einfachheitshalber die Rechenzinken nicht dargestellt sind. Die Rollen 9 der Hebel 8 laufen in der hier nicht dargestellten Kurvenbahn 6, wobei die Rollenhebel 8 an ihrem nach außengewandten Ende 8a derart gelagert sind, dass die Drehbewegung der Zinkenarme 4 um ihre Längsachse L bei einer Veränderung der Höhe der Rollen 9 möglich ist. Figur 2 zeigt die Kurvenbahn 6 in einer mittleren Position im Rotorgehäuse 3. Gemäß der vorliegenden Erfindung ist die Kurvenbahn 6 höhenverstellbar am Getriebegehäuse 11 angebracht, d.h., dass die geschlossene Kurvenbahn 6 um beispielsweise 6 bis 12 mm, hier z.B. 7 mm, nach oben und unten verfahren werden kann. Da die Zinkenarme 4 im Rotorgehäuse 3 gelagert sind und durch das Rotorgehäuse 3 angetrieben werden, bringt eine Höhenverstellung der Kurvensteuerung mit sich, dass auch der Hebelarm 8, wie in Figuren 6a und 6b gezeigt ist, dadurch zusätzlich nach oben oder unten bewegt wird, was wiederum zu einer zusätzlichen Drehung des Zinkenarms 4 um seine Längsachse L und somit zu einer Veränderung des Schwenkwinkels α führt. Die Kurvenbahn 6 ist beispielsweise um einen Verstellweg von ± 5 bis 10 ° von einer mittleren Position aus nach oben und unten verfahrbar, derart, dass es zu einer Veränderung des Schwenkwinkels α der Rechenzinken 5 von bis zu ± 5 bis 10° kommt. Somit kann die Grundstellung bzw. Zinkenstellung in der Arbeitsphase exakt eingestellt bzw. angepasst werden.

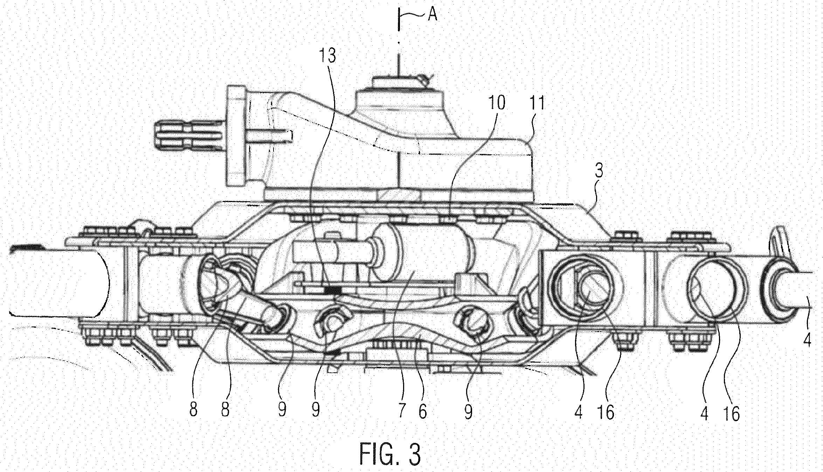

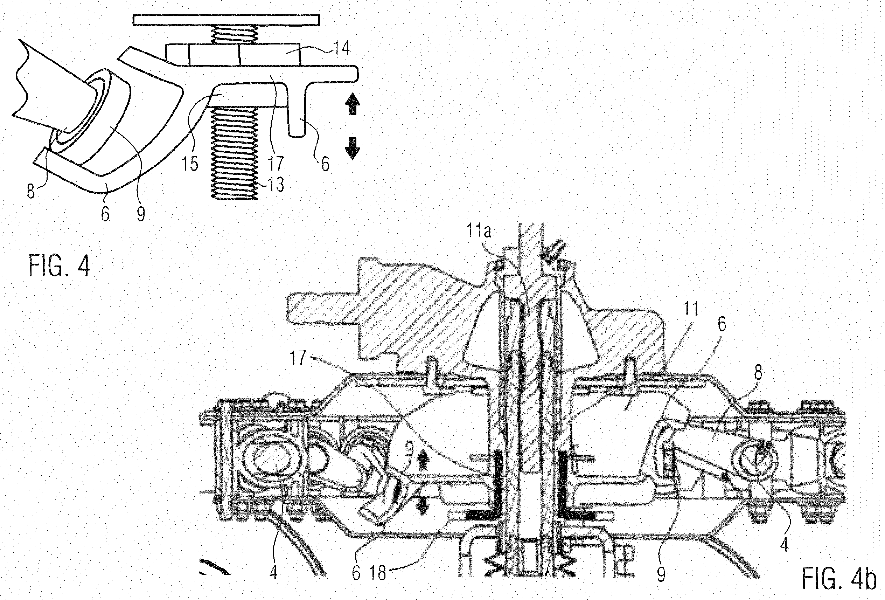

Zum Verstellen der Kurvenbahn 6 am Getriebegehäuse 11 ist vorzugsweise ein Motor 7 vorgesehen. Wie insbesondere aus Figuren 3 und 4 hervorgeht, ist dieser Motor vorzugsweise ein Spindelmotor 7, der an einem ortsfesten Element des Getriebes 11, zum Beispiel dem Getriebegehäuse, das hier oberhalb des Rotorgehäuses 3 angeordnet ist, über eine Halterung 10 befestigt ist. Es ist auch möglich, wenn auch nicht dargestellt, dass der Motor an der Kurvenbahn 6 befestigt ist und zum Beispiel eine Relativbewegung zu dem Getriebegehäuse 11 ausführt. Bei diesem konkreten Ausführungsbeispiel aus Figur 4a, ist oberhalb eines Befestigungsabschnitts 17 der Kurvenbahn 6 ein Gewindestück 14 an der Spindel 13 des Spindelmotors 7 vorgesehen, das beim Verstellen der Spindel zusammen mit der Kurvenbahn 6 verfährt. Die Gegenmutter 15 klemmt das Gewindestück 14 an der Kurvenbahn 6 fest. Somit kann die Kurvenbahn 6 im Rotorgehäuse 3 durch die Gewindespindel 13 des Motors 7 höhenverstellt werden. Die Kurvenbahn 6 wird dabei durch die Gewindespindel 13 entlang der Achse A geführt. Figur 4b zeigt eine alternative Ausführung zur Höhenverstellung der Kurvenbahn 6. Dabei wird die Kurvenbahn 6 z.B. mit Linksgewinde auf einer Gewindebuchse 17 geführt, die mit Rechtsgewinde am Getriebegehäuse 11 geführt und über eine Verzahnung 18 angetrieben wird. Der Motor 7 kann nun wahlweise am Getriebegehäuse 11, oder an der Kurvenbahn 6 befestigt werden. Diese Ausführung erlaubt eine Einstellung der Steuerzeit, zum rechtzeitigen Ausheben der Zinken am Schwad.

Durch das Verstellen der Kurvenbahn 6 kann der Schwenkwinkel α, das heißt die Grundeinstellung des Schwenkwinkels bzw. die Zinkenstellung in der Arbeitsphase an unterschiedliche Arbeitsbedingungen angepasst werden. Somit ist eine schonende, eine normale und eine aggressive Einstellung des Schwenkwinkels der Zinkenarme möglich.

Wie beispielsweise aus den Figuren 5a bis 5c hervorgeht, können die Rechenzinken 5 derart ausgebildet sein, dass sie einen Knick aufweisen, wobei zur Grundeinstellung des Schwenkwinkels α hier der untere gerade Bereich 5a der Rechenzinken 5 betrachtet wird.

Figur 5a zeigt beispielsweise eine schonende Einstellung der Rechenzinken 5 mit z.B. einem Schwenkwinkel α von 6-1° hier insbesondere 1°. D.h., dass der untere Bereich 5a der Rechenzinken 5 unter einem Winkel von 1° relativ zu einer Ebene, die durch die Längsachse L eines jeweiligen Rechenzinkens 5 und der Rotorachse A bzw. einer dazu parallelen vertikalen Achse aufgespannt wird, angestellt ist. Dies kann beispielsweise realisiert werden, indem die Kurvenbahn 6 um einen entsprechenden Betrag in der Höhe verstellt wird. Der untere Bereich 5a des entsprechenden Rechenzinkens 5 ist dabei, in Drehrichtung D betrachtet, nach hinten gekippt.

Figur 5b zeigt eine normale Einstellung der Rechenzinken 5, wobei die Rechenzinken 5 derart auf Griff eingestellt werden, dass der untere Bereich 5a um einen Winkel α von.-2.--6hier insbesondere -4° relativ zu einer Ebene, die durch die Längsachse L eines jeweiligen Rechenzinkens 5 und der Rotorachse A bzw. einer dazu parallelen vertikalen Achse aufgespannt wird, verschwenkt ist. Der untere Bereich 5a des entsprechenden Rechenzinkens 5 ist dabei, in Drehrichtung D betrachtet, nach vorne gekippt

Figur 5c zeigt eine aggressive Einstellung der Rechenzinken unter einem Winkel α von -6 bis - 14° hier insbesondere - 9°, unter dem der untere Bereich 5a der Zinken verschwenkt ist, d.h. dass der untere Bereich nach vorne gekippt ist.

Eine schonende Einstellung, wie in Figur 5a gezeigt, ist beispielsweise geeignet für wenig Futter oder leichtes Futter, da die Zinken 5 hier nicht oder nur wenig ausgelenkt werden. Eine normale Einstellung, wie in Figur 5b gezeigt, eignet sich beispielsweise für normal schweres Futter, das in normalen Mengen vorkommt. Eine aggressive Einstellung, wie in Figur 5c gezeigt ist, ist beispielsweise geeignet für viel oder schweres Futter, da die Zinken 5 hier stark ausgelenkt werden.

Die Höhe, um die bei einer konkreten Ausführungsform die Kurvenbahn angehoben oder gesenkt werden soll, um einen gewünschte Grundstellung des Schwenkwinkels α in der Arbeitsposition der Rechenzinken zu erzielen, kann experimentell ermittelt werden oder aber berechnet werden.

Bei einem Verfahren zum Einstellen des Schwenkwinkels α wird die Kurvenbahn 6 innerhalb des Rotorgehäuses 3 relativ zum Getriebegehäuse 11 verstellt, um im Arbeitsbereich der Rechenzinken 5 die Stellung der Rechenzinken 5 entsprechend anzupassen. Dabei kann die vertikale Position der Kurvenbahn 6 vor Betrieb der Heuwerbungsmaschine 1 eingestellt werden oder aber während des Betriebs, wenn der Landwirt bemerkt, dass die Einstellung beispielsweise in Abhängigkeit des Futteraufkommens verändert werden muss. Es ist auch möglich, dass die Heuwerbungsmaschine 1 zusätzlich eine Einrichtung aufweist, mit der das Rotorgehäuse 3 selbst zusätzlich höhenverstellt werden kann. Somit ist eine ideale Anpassung der Rechenzinkenstellung möglich.

Gemäß einer bevorzugten Ausführungsform erfolgt die Einstellung der Höhe der Kurvenbahn 6 automatisch. Dazu umfasst die Heuwerbungsmaschine 1 vorzugsweise eine Steuer-/Regeleinrichtung (nicht dargestellt), die den Motor 7 ansteuert um die Kurvenbahn 6 automatisch zu verstellen. Die Messwerte werden an die Steuer-/Regeleinrichtung geleitet. Dann wird die Höhe der Kurvenbahn 6 in Abhängigkeit von Messwerten mindestens einer Detektionseinrichtung eingestellt bzw. geregelt. Dies ermöglicht, dass stets eine korrekte Einstellung der Höhe der Kurvenbahn 6 realisiert werden kann, ohne dass der Landwirt eine entsprechende Höhe ermitteln und einstellen muss. Auch eine Korrektur bzw. Regelung der Höhe bei sich ändernden Bedingungen, wie beispielsweise Änderung des Volumens/Menge und oder der Beschaffenheit des Ernteguts bzw. Futters bzw. Schwadhöhe etc. ist während des Verfahrens kontinuierlich möglich.

Gemäß einer bevorzugten Ausführungsform kann dabei die Heuwerbungsmaschine 1 als Detektionseinrichtung eine Kamera, beispielsweise eine Videokamera und/oder einen Lasersensor aufweisen, die am Schlepper, oder am Schwader montiert ist. Besonders vorteilhaft sind eine Kamera und/oder mindestens ein Sensor an der Schleppervorderseite montiert, die Video- und/oder Sensorsignale erzeugen, die der Futtermasse entsprechen.

Die Heuwerbungsmaschine kann als Detektionseinrichtung auch mindestens je einen Sensor zur Ermittlung der Erntegutverluste, der Schwadgröße, der Stoppelhöhe und der Futterverschmutzung umfassen.
Diese Sensoren werden vorzugsweise unmittelbar hinter dem Schwader installiert.

Die Heuwerbungsmaschine 1 kann als Detektionseinrichtung auch mindestens einen Feuchtigkeitssensor umfassen. Die Feuchtigkeit des Ernteguts bzw. Futters hat wiederum Einfluss auf die Menge insbesondere das Gewicht bzw. das Volumen des Ernteguts bzw. Futters, so dass es vorteilhaft ist die Höhe der Kurvenbahn 6 in Abhängigkeit entsprechender Messwerte einzustellen.

Die Heuwerbungsmaschine 1 kann als Detektionseinrichtung auch mindestens ein Höhensensor umfassen, der als Messwert die Schwadhöhe misst. Eine entsprechende Detektionseinrichtung kann beispielsweise eine Radar - Messeinrichtung sein.

## Patentansprüche

1. Heuwerbungsmaschine (1), insbesondere Schwader mit mindestens einem Rechenkreisel (2), der umfasst:
- ein Rotorgehäuse (3),
- mehrere um eine Rotorachse (A) umlaufende Zinkenarme (4) mit Rechenzinken (5),
- eine Kurvenbahn (6) in dem Rotorgehäuse (3), über die ein Schwenkwinkel (α) der Rechenzinken (5) um die Längsachse (L) des jeweiligen Zinkenarms (4) in Abhängigkeit der Umlaufposition des Zinkenarms (4) steuerbar ist, **dadurch gekennzeichnet, dass**
die geschlossene Kurvenbahn (6) innerhalb des Rotorgehäuses (3) höhenverstellbar ist, und
zur Höhenverstellung der Kurvenbahn (6) ein Motor oder Hydraulikzylinder vorgesehen ist, derart, dass die Kurvenbahn (6) während des Betriebs der Heuwerbungsmaschine (1) in ihrer Höhe verstellbar ist.

2. Heuwerbungsmaschine (1) nach Anspruch 1, **dadurch gekennzeichnet, dass** durch die Höhenverstellung der Kurvenbahn (6) der Schwenkwinkel (α) der Rechenzinken (5) veränderbar ist.

3. Heuwerbungsmaschine (1) nach Anspruch 1 oder 2, **dadurch gekennzeichnet, dass** die Zinkenarme (5) drehfest mit Hebeln (8), insbesondere mit Rollenhebeln (8), verbunden sind, wobei die den Zinkenarmen (4) abgewandten Enden der Hebel (8) in der Kurvenbahn (6) geführt werden, insbesondere die Rollen (9) in der Kurvenbahn (6) laufen.

4. Heuwerbungsmaschine nach mindestens einem der vorhergehenden Ansprüche, **dadurch gekennzeichnet, dass** zur Höhenverstellung der Kurvenbahn ein Spindelmotor (7) vorgesehen ist.

5. Heuwerbungsmaschine (1) nach Anspruch 4, **dadurch gekennzeichnet, dass** der Motor (7) über eine Halterung (10) befestigt ist und während der Höhenverstellung der Kurvenbahn (6) unbewegt bleibt, oder an der Kurvenbahn (6) befestigt ist und Relativbewegungen zu einem Getriebegehäuse (11) ausführt.

6. Heuwerbungsmaschine (1) nach mindestens Anspruch 4 oder 5, **dadurch gekennzeichnet, dass** der Motor (7) mit seiner Halterung (10) an einem statischen Teil, insbesondere einem Getriebegehäuse (11) befestigt ist, und das Rotorgehäuse (3) auf der Rotorachse (A) drehbar gelagert ist, wobei das Rotorgehäuse (3) von dem Getriebe (11 a) angetrieben wird.

7. Heuwerbungsmaschine (1) nach mindestens einem der Ansprüche 1 bis 6, **dadurch gekennzeichnet, dass** die Kurvenbahn (6) um einen Verstellweg von ± 6 bis 12 mm von einer mittleren Position aus nach oben oder unten verfahrbar ist, derart, dass es zu einer Veränderung des Schwenkwinkels der Rechenzinken (5) in einem Bereich von bis zu ± 5 - 10 Grad kommt

8. Verfahren zum Einstellen des Schwenkwinkels (α) von Rechenzinken (5) um die Längsachse (L) eines jeweiligen Zinkenarms (4) eines Rechenkreisels (2) einer Heuwerbungsmaschine (1), insbesondere nach mindestens einem der Ansprüche 1 bis 7, indem eine Kurvenbahn (6), über die die Schwenkwinkel (α) der Rechenzinken (5) um die Längsache (L) des jeweiligen Zinkenarms (4) in Abhängigkeit der Umlaufposition des Zinkenarms steuerbar ist, innerhalb eines Rotorgehäuses (3) eines Rechenkreisels (2) der Heuwerbungsmaschine (1) höhenverstellt wird, wobei die geschlossene Kurvenbahn (6) während des Betriebs der Heuwerbungsmaschine (1) mittels Motor (7) oder Hydraulikzylinder in ihrer Höhe verstellt wird.

9. Verfahren nach Anspruch 8, **dadurch gekennzeichnet, dass** die Kurvensteuerung (6) vor dem Betrieb der Heuwerbungsmaschine (1) in ihrer Höhe verstellt wird.

10. Verfahren nach Anspruch 8 oder 9, **dadurch gekennzeichnet, dass** die Höhe der Kurvenbahn (6) in Abhängigkeit von mindestens einem der folgenden Parameter eingestellt wird: Futter-bzw. Erntegutmenge und /oder Futter-bzw. Erntegutgewicht und/oder Schwadhöhe und/oder Feuchtigkeit des Futters bzw. Ernteguts und/oder Futterverlust und/oder Futterverschmutzung und/oder Arbeitsgeschwindigkeit und oder Drehmoment im Schwaderantrieb,
wobei der oder die Parameter vorzugsweise mittels einer Detektionseinrichtung erfasst werden und die Messwerte an eine Steuer-/Regeleinrichtung weiter geleitet werden und die Höhe der Kurvenbahn automatisch in Abhängigkeit der Messwerte eingestellt bzw. geregelt wird.

11. Verfahren nach mindestens einem der Ansprüche 8-9, **dadurch gekennzeichnet, dass** ein unterer Bereich (5a) der Rechenzinken (5) in seiner Arbeitsstellung zur schonenden Einstellung auf einen Schwenkwinkel (α) - zwischen einer Ebene, die durch die Längsachse (L) des entsprechenden Zinkenarms (4) und die Rotorachse A oder einer dazu parallelen vertikalen Achse aufgespannt wird und dem unteren Bereich (5a) von 6° bis 0°, insbesondere 1°, nach hinten entgegen der Drehrichtung D des Rotorgehäuses verschwenkt wird oder bis zu einem Winkel zwischen 0° und -2° nach vorne in Drehrichtung (D) des Rotorgehäuses (3) verschwenkt wird, und/oder
dass ein unterer Bereich (5a) der Rechenzinken (5) in seiner Arbeitsstellung bei normaler Einstellung auf einen Schwenkwinkel (α) von - 2 bis - 6°, insbesondere - 4°, nach vorne in Drehrichtung (D) des Rotorgehäuses (3) verschwenkt wird und/oder dass ein unterer Bereich (5a) der Rechenzinken (5) in seiner Arbeitsstellung bei aggressiver Einstellung auf einen Schwenkwinkel (α) von -6 bis - 14°, insbesondere - 9°, nach vorne in Drehrichtung (D) des Rotorgehäuses (3) verschwenkt wird.

12. Heuwerbungsmaschine (1) nach mindestens einem der vorhergehenden Ansprüchen 1 bis 7, **dadurch gekennzeichnet, dass** die Heuwerbungsmaschine (1) eine Steuer-/Regeleinrichtung umfasst, die den Motor (7) ansteuert um die Kurvenbahn (6) automatisch zu verstellen, und wobei insbesondere die Höhe der Kurvenbahn (6) in Abhängigkeit von Messwerten mindestens einer einer Detektionseinrichtung eingestellt bzw. geregelt wird.

13. Heuwerbungsmaschine (1) nach Anspruch 12, **dadurch gekennzeichnet, dass** die Heuwerbungsmaschine (1) weiter als Dektionseinrichtung eine Kamera und/oder einen Lasersensor umfasst, die vorzugsweise am Schlepper montiert sind, wobei die Höhe der Kurvenbahn (6) in Abhängigkeit von Videosignalen und/oder Sensorsignalen, die der der Masse bzw. der Menge des Ernteguts entsprechen, eingestellt bzw. geregelt wird und/oder
die Heuwerbungsmaschine (1) weiter als Detektionseinrichtung mindestens einen Feuchtigkeitssensor umfasst, der als Messwert die Feuchtigkeit des Ernteguts bzw. Futters messen kann, wobei die Höhe der Kurvenbahn (6) in Abhängigkeit entsprechender Messwerte eingestellt bzw. geregelt wird und/oder
die Heuwerbungsmaschine (1) weiter als Detektionseinrichtung mindestens einen Höhensensor umfasst, der als Messwert die Schwadhöhe als Messwert misst, wobei die Höhe der Kurvenbahn (6) in Abhängigkeit entsprechender Messwerte eingestellt bzw. geregelt wird.

14. Heuwerbungsmaschine (1) nach mindestens einem der Ansprüche 1 bis 7 oder 12-13, **dadurch gekennzeichnet, dass** der Spindelmotor (7) über einen Sensor zur Ermittlung der Lage der Kurvenbahn (6) verfügt.

15. Heuwerbungsmaschine (1) nach mindestens einem der Ansprüche 1 bis 7 oder 12-14, **dadurch gekennzeichnet, dass** mit einem GPS Signal und einer digitalen Karte in der Sonderbedingungen im Feld wie insbesondere Moor, Felsen, Ertragskarte verzeichnet sind, ein Abgleich erfolgt und die Höhenverstellung der Kurvenbahn (6) entsprechend angepasst wird.

## Claims

1. Haymaking machine (1), in particular rake with at least one raking gyro (2), which comprises:
- a rotor housing (3),
- several tine arms (4) rotating around a rotor axis (A) with rake tines (5),
- a curved track (6) in the rotor housing (3), via which a pivot angle (α) of the rake tines (5) about the longitudinal axis (L) of the respective tine arm (4) can be controlled depending on the circumferential position of the tine arm (4),
**characterized in that** t
he closed curved track (6) can be adjusted in height within the rotor housing (3), and a motor or hydraulic cylinder is provided for adjusting the height of the curved track (6) such that the height of the curved track (6) can be adjusted during operation of the haymaking machine (1).

2. Haymaking machine (1) according to claim 1, **characterized in that** the pivot angle (α) of the rake tines (5) can be changed by the height adjustment of the curved track (6).

3. Haymaking machine (1) according to claim 1 or 2, **characterized in that** the tine arms (5) are rotatably connected to levers (8), in particular to roller levers (8), the ends of the levers (8) facing away from the tine arms (4) being guided in the curved track (6), in particular the rollers (9) running in the curved path (6).

4. Haymaking machine according to at least one of the preceding claims, **characterized in that** a spindle motor (7) is provided for height adjustment of the curved track.

5. Haymaking machine (1) according to claim 4, **characterized in that** the motor (7) is fastened via a holder (10) and remains stationary during the height adjustment of the curved track (6), or is fastened to the curved track (6) and executes relative movements to a gear housing (11).

6. Haymaking machine (1) according to at least claim 4 or 5, **characterized in that** the motor (7) with its holder (10) is fastened to a static part, in particular a gear housing (11), and the rotor housing (3) is rotatably mounted on the rotor axis (A), the rotor housing (3) being driven by the gear (11 a).

7. Haymaking machine (1) according to at least one of claims 1 to 6, **characterized in that** the curved track (6) can be moved up or down by an adjustment path of ± 6 to 12 mm from a central position, such that a change in the pivot angle of the rake tines (5) within a range of up to ± 5 - 10 degrees results.

8. Method for adjusting the pivot angle (α) of rake tines (5) about the longitudinal axis (L) of a respective tine arm (4) of a raking gyro (2) of a haymaking machine (1), in particular according to at least one of claims 1 to 7, by a curved track (6), via which the pivot angle (α) of the rake tines (5) about the longitudinal axis (L) of the respective tine arm (4) can be controlled depending on the circumferential position of the tine arm, is adjusted in height within a rotor housing (3) of a rake gyro (2) of the haymaking machine (1), the height of the closed curved track (6) being adjusted during operation of the haymaking machine (1) by means of a motor (7) or hydraulic cylinder.

9. Method according to claim 8, **characterized in that** the curve control (6) is adjusted in height before the operation of the haymaking machine (1).

10. Method according to claim 8 or 9, **characterized in that** the height of the curved track (6) is set as a function of at least one of the following parameters:
quantity of forage or crop and/or forage or crop weight and/or swath height and/or moisture of the forage or crop and/or forage loss and/or forage contamination and/or working speed and/or torque in the rake drive, the parameter or parameters preferably being detected by means of a detection device and the measured values being forwarded to a control device and the height of the curved track being automatically set or controlled depending on the measured values.

11. Method according to at least one of claims 8-9, **characterized in that** a lower region (5a) of the rake tines (5) is pivoted backward in its working position, with a gentle adjustment, to a pivot angle (α) from 6° to 0°, in particular 1°, - between a plane which is clamped through the longitudinal axis (L) of the corresponding tine arm (4) and the rotor axis A or a parallel vertical axis and the lower region (5a) -, against the direction of rotation D of the rotor housing, or forward to an angle between 0° and -2° in the direction of rotation (D) of the rotor housing (3), and/or that a lower region (5a) of the rake tines (5) is pivoted forward in its working position, with a normal adjustment, to a pivot angle (α) from -2 to - 6°, in particular -4°, in the direction of rotation (D) of the rotor housing (3) and/or that a lower region (5a) of the rake tines (5) is pivoted forward in its working position, with an aggressive adjustment, to a pivot angle (α) from -6 to -14°, in particular -9 °, in the direction of rotation (D) of the rotor housing (3).

12. Haymaking machine (1) according to at least one of the preceding claims 1 to 7, **characterized in that** the haymaking machine (1) comprises a control device which controls the motor (7) to adjust the curved track (6) automatically, and in particular the height of the curved track (6) being set or controlled as a function of measured values from at least one of the detection devices.

13. Haymaking machine (1) according to claim 12, **characterized in that** the haymaking machine (1) further comprises as a detection device a camera and/or a laser sensor, which are preferably mounted on the tractor, the height of the curved track (6) being set or controlled depending on video signals and/or sensor signals which correspond to the mass or quantity of the crop, and/or the haymaking machine (1) further comprises as a detection device at least one moisture sensor which measures the moisture of the crop or forage as a measured value, the height of the curved track (6) being set or controlled depending on the corresponding measured values and/or the haymaking machine (1) further comprises as a detection device at least one height sensor which measures the swath height as a measured value, the height of the curved track (6) being set or controlled as a function of the corresponding measured values.

14. Haymaking machine (1) according to at least one of claims 1 to 7 or 12-13, **characterized in that** the spindle motor (7) has a sensor for determining the position of the curved track (6).

15. Haymaking machine (1) according to at least one of claims 1 to 7 or 12-14, **characterized in that** a comparison is carried out with a GPS signal and a digital map in which the special conditions in the field such as moor, rocks, yield map are marked, and the height adjustment of the curved track (6) is adapted accordingly.

## Revendications

1. Machine de fenaison (1), notamment un andaineur avec au moins un râteau rotatif (2) comprenant :
- un boîtier de rotor (3),
- plusieurs bras porte-dents (4) avec des dents de râteau (5), tournant autour d'un axe de rotor (A),
- une rainure de came (6) dans le boîtier de rotor (3), par laquelle un angle de pivotement (a) des dents de râteau (5) autour de l'axe longitudinal (L) du bras de dent (4) respectif peut être commandé en fonction de la position de rotation du bras de dent (4), **caractérisé en ce que**
la rainure de came (6) fermée est réglable en hauteur à l'intérieur du boîtier de rotor (3), et
un moteur ou un cylindre hydraulique est prévu pour le réglage de la hauteur de la rainure de came (6), de telle sorte que la hauteur de la rainure de came (6) puisse être réglée pendant le fonctionnement de la machine de fenaison (1).

2. Machine de fenaison (1) selon la revendication 1, **caractérisée en ce que** l'angle de pivotement (α) des dents de râteau (5) peut être modifié par le réglage de la hauteur de la rainure de came (6).

3. Machine de fenaison (1) selon la revendication 1 ou 2, **caractérisée en ce que** les bras porte-dents (5) sont reliés de manière fixe en rotation à des leviers (8), en particulier à des leviers à galets (8), les extrémités des leviers (8) éloignées des bras porte-dents (4) étant guidées dans la rainure de came (6), en particulier les galets (9) roulant dans la rainure de came (6).

4. Machine de fenaison selon au moins une des revendications précédentes, **caractérisée en ce qu'**un moteur d'axe (7) est prévu pour le réglage en hauteur de la rainure de came.

5. Machine de fenaison (1) selon la revendication 4, **caractérisée en ce que** le moteur (7) est fixé par l'intermédiaire d'un support (10) et reste immobile pendant le réglage en hauteur de la rainure de came (6), ou est fixé sur la rainure de came (6) et effectue des mouvements relatifs par rapport à un boîtier de transmission (11).

6. Machine de fenaison (1) selon au moins la revendication 4 ou 5, **caractérisée en ce que** le moteur (7) est fixé avec son support (10) à une partie statique, en particulier un boîtier de transmission (11), et le boîtier de rotor (3) est monté de manière rotative sur l'axe de rotor (A), où le boîtier de rotor (3) est entraîné par la transmission (11a).

7. Machine de fenaison (1) selon au moins une des revendications 1 à 6, **caractérisée en ce que** la rainure de came (6) peut être déplacée vers le haut ou vers le bas d'une distance de réglage de ± 6 à 12 mm à partir d'une position centrale de telle sorte que l'angle de pivotement des dents de râteau (5) est modifié dans une plage allant jusqu'à ± 5 - 10 degrés.

8. Procédé de réglage de l'angle de pivotement (α) de dents de râteau (5) autour de l'axe longitudinal (L) d'un bras porte-dents (4) respectif d'un râteau rotatif (2) d'une machine de fenaison (1), en particulier selon au moins l'une des revendications 1 à 7, lors duquel une rainure de came, par laquelle les angles de pivotement (α) des dents de râteau (5) autour de l'axe longitudinal (L) du bras porte-dents (4) respectif peuvent être commandés en fonction de la position de rotation du bras porte-dents, est réglée en hauteur dans un boîtier de rotor (3) d'un râteau rotatif (2) de la machine de fenaison (1), où la rainure de came fermée (6) est réglée en hauteur pendant le fonctionnement de la machine de fenaison (1) au moyen d'un moteur (7) ou d'un cylindre hydraulique.

9. Procédé selon la revendication 8, **caractérisé en ce que** la rainure de came (6) est réglée en hauteur avant le fonctionnement de la machine de fenaison (1).

10. Procédé selon la revendication 8 ou 9, **caractérisé en ce que** la hauteur de la rainure de came (6) est réglée en fonction d'au moins un des paramètres suivants :
la quantité de fourrage ou de récolte et/ou le poids du fourrage ou de la récolte et/ou la hauteur de l'andain et/ou l'humidité du fourrage ou de la récolte et/ou les pertes de fourrage et/ou la contamination du fourrage et/ou la vitesse de travail et/ou le couple dans l'entraînement de l'andaineur,
où le ou les paramètres sont de préférence détectés au moyen d'un dispositif de détection et les valeurs mesurées sont transmises à un dispositif de commande/régulation et la hauteur de la rainure de came est automatiquement réglée ou régulée en fonction des valeurs mesurées.

11. Procédé selon au moins une des revendications 8-9, **caractérisé en ce qu'**une zone inférieure (5a) des dents de râteau (5), dans sa position de travail avec un réglage doux vers un angle de pivotement (α) - entre un plan défini par l'axe longitudinal (L) du bras de dent correspondant (4) et l'axe du rotor A ou un axe vertical parallèle à celui-ci et la zone inférieure (5a) - est basculée de 6° à 0°, en particulier 1°, vers l'arrière dans le sens inverse de la rotation D du boîtier de rotor ou jusqu'à un angle compris entre 0° et -2° vers l'avant dans le sens de la rotation (D) du boîtier de rotor (3), et/ou
**que**, dans sa position de travail avec un réglage normal, une zone inférieure (5a) des dents de râteau (5) est pivotée vers un angle de pivotement (α) de - 2 à - 6°, en particulier - 4°, vers l'avant dans le sens de rotation (D) du boîtier de rotor (3) et/ou
**que** dans sa position de travail avec un réglage agressif, une zone inférieure (5a) des dents de râteau (5) est pivotée vers un angle de pivotement (α) de -6 à - 14°, en particulier - 9° vers l'avant dans le sens de rotation (D) du boîtier de rotor (3).

12. Machine de fenaison (1) selon au moins une des revendications précédentes 1 à 7, **caractérisée en ce que** la machine de fenaison (1) comprend un dispositif de commande/régulation qui commande le moteur (7) afin de régler automatiquement la rainure de came (6), et où en particulier la hauteur de la rainure de came (6) est réglée ou régulée en fonction des valeurs mesurées d'au moins un dispositif de détection.

13. Machine de fenaison (1) selon la revendication 12, **caractérisée en ce que** la machine de fenaison (1) comprend en outre comme dispositif de détection une caméra et/ou un capteur laser, qui sont de préférence montés sur le tracteur, la hauteur de la rainure de came (6) étant réglée ou commandée en fonction de signaux vidéo et/ou de signaux de capteur correspondant à ceux de la masse ou de la quantité de la récolte, et/ou la machine de fenaison (1) comprend en outre, comme dispositif de détection, au moins un capteur d'humidité qui peut mesurer l'humidité des produits de récolte ou du fourrage en tant que valeur mesurée, la hauteur de la rainure de came (6) étant réglée ou commandée en fonction de valeurs mesurées correspondantes et/ou la machine de fenaison (1) comprend en outre, comme dispositif de détection, au moins un capteur de hauteur qui mesure la hauteur de l'andain en tant que valeur mesurée, la hauteur de la rainure de came (6) étant réglée ou commandée en fonction de valeurs mesurées correspondantes.

14. Machine de fenaison (1) selon au moins une des revendications 1 à 7 ou 12-13, **caractérisée en ce que** le moteur d'axe (7) comporte un capteur pour déterminer la position de la rainure de came (6).

15. Machine de fenaison (1) selon au moins l'une des revendications 1 à 7 ou 12-14, **caractérisée en ce qu'**un recoupement est effectué avec un signal GPS et une carte numérique dans laquelle sont enregistrées les conditions particulières du champ, telles que notamment de la lande, des rochers, une carte de rendement, et le réglage en hauteur de la rainure de came (6) est adapté en conséquence.
